# EUROPÄISCHE PATENTSCHRIFT

(11) **EP 3 233 598 B1**
(45) Veröffentlichungstag und Bekanntmachung des Hinweises auf die Patenterteilung: **18.11.2020**
(21) Anmeldenummer: 15808139.8
(22) Anmeldetag: 08.12.2015
(51) Int. Cl.: B60T 13/66, B60T 13/68

(54) **BREMSANLAGE SOWIE BREMSENSTEUERVORRICHTUNG**
BRAKE SYSTEM AND BRAKE CONTROL DEVICE
SYSTÈME DE FREINAGE ET DISPOSITIF DE COMMANDE DE FREINS

(30) Priorität: 16.12.2014 DE 102014225954
(43) Veröffentlichungstag der Anmeldung: 25.10.2017
(73) Patentinhaber: Continental Teves AG & Co. OHG, 60488 Frankfurt am Main (DE)
(72) Erfinder: BESIER, Marco, 65307 Bad Schwalbach (DE); DRUMM, Stefan, 55291 Saulheim (DE); LINHOFF, Paul, 61267 Neu-Anspach (DE); COURTH, Christian, 60439 Frankfurt (DE)
(86) Internationale Anmeldenummer: PCT/EP2015/078963
(87) Internationale Veröffentlichungsnummer: WO 2016/096538

(56) Entgegenhaltungen:
- DE-A1-102006 014 836
- DE-A1-102011 116 906
- DE-A1-102011 122 776
- DE-A1-102012 205 861
- DE-A1-102012 205 862
- DE-A1-102012 210 809
- DE-A1-102013 007 824
- GB-A- 2 148 433
- US-A1- 2003 020 327

## Beschreibung

Die Erfindung betrifft eine Bremsanlage gemäß dem Oberbegriff von Anspruch 1 sowie eine Bremsensteuervorrichtung gemäß dem Oberbegriff von Anspruch 9.

Bei Kraftfahrzeugen sind hydraulische Bremssysteme weit verbreitet. Vermehrt kommen Bremssysteme zum Einsatz, in welchen Bremsungen durchführbar sind, die unabhängig von einem Fahrerbremswunsch durch Assistenzsysteme mit Hilfe elektrischer bzw. elektronischer Mittel ausgelöst werden. Derartige, durch elektronische Steuergeräte ausgelöste Bremsungen finden beispielsweise bei automatischen Abstandsregelsystemen oder (Not)Bremsassistenzfunktionen Anwendung. Es sind weiter "Brake-by-wire"-Bremssysteme bekannt, die auch bei einer Normalbremsbetätigung durch den Fahrer die Bremsbetätigung elektronisch erfassen und die entsprechende Bremsung elektronisch kontrolliert umsetzen, ohne dass der Fahrer dabei einen direkten mechanischen oder hydraulischen Zugriff auf die Radbremsen erhält. In derartigen Systemen ist die Verfügbarkeit der Bremsanlage und speziell der radindividuellen Bremsdruckregelfunktionen für die Sicherheit von großer Bedeutung.

Es ist zu erwarten, dass zukünftig auch Kraftfahrzeugbremssysteme zum Einsatz kommen werden, welche für automatisiert fahrende Kraftfahrzeuge geeignet sind. Diese Bremssysteme müssen grundsätzlich elektronisch ansteuerbare Systeme oder "Brake-by-wire"-Systeme sein. Dies bedeutet, dass eine Bremsanforderung über elektronische oder elektrische Steuersignale angefordert und vom System ohne Zutun des Fahrers umgesetzt werden kann. Besonders in solchen Systemen muss aus Sicherheitsgründen eine ausreichend hohe Verfügbarkeit des Bremssystems und auch der fremdansteuerbaren Bremsfunktion mit radindividueller Regelung gewährleistet sein.

In der WO 2012/150120 A1 wird eine Bremsanlage für Kraftfahrzeuge beschrieben, welche vier hydraulisch betätigbare Radbremsen, einen unter Atmosphärendruck stehenden Druckmittelvorratsbehälter und eine erste elektrohydraulische Bremsensteuervorrichtung umfasst, welche einen Hauptbremszylinder, eine elektrisch ansteuerbare Druckquelle, eine Druckregelventilanordnung zum Einstellen radindividueller Bremsdrücke und für jede Radbremse einen radindividuellen Ausgangsdruckanschluss umfasst. Weiter umfasst die Bremsanlage ein zweites elektrohydraulisches Modul mit vier elektrisch ansteuerbaren Pumpen und elektrisch betätigbaren Ventilen, welches hydraulisch vor der Druckregelventilanordnung der ersten Bremsensteuervorrichtung angeordnet ist. Bei einem Ausfall der elektronischen Steuer- und Regeleinheit der ersten Bremsensteuervorrichtung können die Bremsdrück mittels des zweiten Moduls nur bremskreisweise eingestellt werden. Eine radindividuelle Bremsdruckeinstellung, wie sie z.B. für eine Antiblockierregelung benötigt wird, ist mit dem zweiten Modul nicht möglich. Die Verfügbarkeit von radindividuellen Regelfunktionen ist daher nur begrenzt. Die Bremsanlage ist daher für hochautomatisiert oder autonom fahrende Kraftfahrzeuge weniger geeignet.
Aus der WO 2012/028521 A1 ist eine Bremsanlage für Kraftfahrzeuge bekannt mit einer elektrisch steuerbaren Druckbereitstellungseinrichtung, einer Druckregelventilanordnung zur Regelung und/oder Steuerung der an den einzelnen Radbremsen eingesteuerten Radbremsdrücke und einer ersten elektronischen Steuer- und Regeleinheit, welche die Druckbereitstellungseinrichtung und die Druckregelventilanordnung steuert oder regelt, wobei eine elektrisch steuerbare Zusatzdruckbereitstellungsvorrichtung mit einer zweiten elektronischen Steuer- und Regeleinheit vorgesehen ist, mittels welcher der Hauptbremszylinder betätigbar ist. Im Falle eines Ausfalls der ersten elektronischen Steuer- und Regeleinheit ist jedoch ein Einstellen von radindividuellen Bremsdrücke an den Radbremsen mittels der Druckregelventilanordnung nicht mehr möglich. Auch diese Bremsanlage ist daher für hochautomatisiert oder autonom fahrende Kraftfahrzeuge weniger geeignet.

Die DE 10 2011 116 906 A1, DE 10 2012 210 809 A1 und DE 10 2012 205 861 A1 offenbaren weitere derartige Bremsanlagen.

Es ist Aufgabe der vorliegenden Erfindung, eine Bremsanlage für zumindest vierrädrige Kraftfahrzeuge sowie eine Bremsensteuervorrichtung bereitzustellen, welche hohe Anforderungen bezüglich der Verfügbarkeit der Einstellung von radindividuellen Bremsdrücken erfüllt.
Diese Aufgabe wird erfindungsgemäß durch eine Bremsanlage gemäß Anspruch 1 und eine Bremsensteuervorrichtung gemäß Anspruch 9 gelöst.

Der Erfindung liegt der Gedanke zugrunde, bei einer Bremsanlage für Kraftfahrzeuge mit hydraulisch betätigbaren Radbremsen, einem unter Atmosphärendruck stehen Druckmittelvorratsbehälter und einer ersten elektrohydraulischen Bremsensteuervorrichtung, welche eine erste Druckregelventilanordnung zum Einstellen radindividueller Bremsdrücke, eine erste elektrisch ansteuerbare Druckquelle und für jede hydraulisch betätigbare Radbremse der Bremsanlage einen radindividuellen Ausgangsdruckanschluss umfasst, eine zweite elektrohydraulische Bremsensteuervorrichtung vorzusehen, welche eine zweite Druckregelventilanordnung, eine zweite elektrisch ansteuerbare Druckquelle und einen Behälteranschluss umfasst, und die in Reihe zwischen die Ausgangsdruckanschlüsse der ersten Bremsensteuervorrichtung, welche einer Gruppe von Radbremsen zugeordnet sind, und die Radbremsen der Gruppe von Radbremsen geschaltet ist und über den Behälteranschluss mit dem Druckmittelvorratsbehälter verbunden ist.

Die Erfindung bietet den Vorteil, dass ein elektrisch gesteuerter Druckaufbau sowie eine radindividuelle Regelung an zumindest einem Teil der Radbremsen auch bei Ausfall einer der Bremsensteuervorrichtungen weiterhin mittels der anderen Bremsensteuervorrichtung schnell und präzise möglich sind.

Bevorzugt sind die Radbremsen, welche nicht der Gruppe von Radbremsen angehören, sowohl hydraulisch betätigbar als auch elektromechanisch betätigbar ausgeführt. Besonders bevorzugt ist die zweite Bremsensteuervorrichtung derart ausgeführt, dass sie zur Ansteuerung der elektromechanischen Betätigung diese Radbremsen ausgebildet ist. So kann bei Ausfall der ersten Bremsensteuervorrichtung dennoch durch die zweite Bremsensteuervorrichtung an allen Radbremsen Bremsmoment aufgebaut werden.

Bevorzugt ist die zweite Bremsensteuervorrichtung zur Betätigung und Regelung zumindest der hydraulisch betätigbaren Radbremsen einer Vorderachse des Kraftfahrzeugs vorgesehen. Besonders bevorzugt wird die Gruppe von Radbremsen durch die hydraulisch betätigbaren Radbremsen einer Vorderachse des Kraftfahrzeugs gebildet. Besonders bevorzugt sind dann die Radbremsen einer Hinterachse des Kraftfahrzeugs sowohl hydraulisch betätigbar als auch elektromechanisch betätigbar ausgeführt.

Alternativ ist es bevorzugt, dass die zweite Bremsensteuervorrichtung zur Betätigung und Regelung aller hydraulisch betätigbaren Radbremsen ausgebildet ist, d.h. dass die Gruppe von Radbremsen durch alle hydraulisch betätigbaren Radbremsen gebildet wird.

Bevorzugt umfasst die zweite Druckquelle für jede Radbremse der Gruppe von Radbremsen eine Pumpe, wobei deren Saugseiten mit dem Druckmittelvorratsbehälter verbunden sind.

Die zweite Druckregelventilanordnung weist für jede Radbremse der Gruppe von Radbremsen eine elektrisch betätigbare Auslassventilanordnung mit zumindest einem analog ansteuerbaren oder analogisiert ausgeführten Ventil auf, wobei die Radbremse über die Auslassventilanordnung mit dem Druckmittelvorratsbehälter verbindbar ist. So kann bei Ausfall der ersten Bremsensteuervorrichtung eine präzise Druckeinstellung an den einzelnen entsprechenden Radbremsen durch geregeltes Ablassen von Druckmittel in den Druckmittelvorratsbehälter mittels der zweiten Bremsensteuervorrichtung durchgeführt werden.

Die zweite Bremsensteuervorrichtung umfasst für jede der Radbremsen der Gruppe von Radbremsen einen radindividuellen Eingangsdruckanschluss sowie einen radindividuellen Ausgangsdruckanschluss. Dabei ist jeweils der Eingangsdruckanschluss der zweiten Bremsensteuervorrichtung mit dem der Radbremse zugeordneten Ausgangsdruckanschluss der ersten Bremsensteuervorrichtung und der Ausgangsdruckanschluss der zweiten Bremsensteuervorrichtung mit der Radbremse verbunden.

Gemäß einer bevorzugten Ausführungsform der erfindungsgemäßen Bremsanlage ist die erste Bremsensteuervorrichtung als eine bauliche Einheit in Form eines Bremsensteuergeräts mit einer ersten elektronischen Steuer- und Regeleinheit und einer ersten hydraulischen Steuer- und Regeleinheit ausgeführt, wobei die erste elektronische Steuer- und Regeleinheit zur Ansteuerung der ersten Druckregelventilanordnung und der ersten Druckquelle ausgebildet ist. So kann die zweite Bremsensteuervorrichtung bei Bedarf zugebaut werden oder nicht.

Bevorzugt ist die zweite Bremsensteuervorrichtung eine erfindungsgemäße Bremsensteuervorrichtung.

Die Erfindung betrifft auch eine Bremsensteuervorrichtung zur Betätigung von hydraulisch betätigbaren Radbremsen, welche eine elektrisch ansteuerbare Druckquelle, einen radindividuellen Ausgangsdruckanschluss für jede der Radbremsen und eine Druckregelventilanordnung zum Einstellen radindividueller Bremsdrücke an den Ausgangsdruckanschlüssen umfasst, einen Behälteranschluss zur Verbindung mit einem unter Atmosphärendruck stehen Druckmittelvorratsbehälter sowie für jede der Radbremsen einen radindividuellen Eingangsdruckanschluss umfasst. Diese Bremsensteuervorrichtung kann so in Reihe zwischen eine an sich bekannte Bremsensteuervorrichtung mit einer elektrisch ansteuerbaren Druckquelle, einem radindividuellen Ausgangsdruckanschluss für jede Radbremse und einer Druckregelventilanordnung zum Einstellen radindividueller Bremsdrücke an den Ausgangsdruckanschlüssen, und zumindest einen Teil der Radbremsen geschaltet werden.

Die erfindungsgemäße Bremsensteuervorrichtung bietet den Vorteil, dass sie optional in einem Kraftfahrzeug bzw. in einer an sich bekannten Bremsanlage ergänzt werden kann, um ein hochautomatisiertes Fahren oder autonomes Fahren zu ermöglichen.

Der Behälteranschluss ist bevorzugt mit der Druckquelle zur Versorgung der Druckquelle mit Druckmittel verbunden. Dies bietet den Vorteil, dass die Bremsensteuervorrichtung weitgehend ungehindert Druckmittel direkt aus dem Druckmittelvorratsbehälter ansaugen kann.

Bevorzugt handelt es sich um eine elektrohydraulische Bremsensteuervorrichtung für die zwei hydraulisch betätigbaren Radbremsen der Vorderachse des Kraftfahrzeugs oder für die vier hydraulisch betätigbare Radbremsen von Vorder- und Hinterachse des Kraftfahrzeugs.

Bevorzugt umfasst die Druckquelle der Bremsensteuervorrichtung für jede der zur Drucksteuerung vorgesehenen Radbremsen zumindest eine Pumpe, wobei die Saugseiten der Pumpen über den Behälteranschluss mit dem Druckmittelvorratsbehälter verbunden sind. Entsprechende Pumpen werden bereits grundsätzlich verbreitet in konventionellen Bremsanlagen nach dem Rückförderprinzip eingesetzt, sind daher kostengünstig herstellbar und stellen bei direktem Anschluss an den Druckmittelvorratsbehälter ausreichende Druckmittelvolumenströme bereit, da schnell und ausreichend Druckmittel aus dem Druckmittelvorratsbehälter angesaugt werden kann.

Die Druckregelventilanordnung der (zweiten) Bremsensteuervorrichtung umfasst bevorzugt eine elektrisch betätigbare Auslassventilanordnung für jeden Ausgangsdruckanschluss, wobei der Ausgangsdruckanschluss über die Auslassventilanordnung mit dem Behälteranschluss verbindbar ist. Besonders bevorzugt umfasst die Auslassventilanordnung zumindest ein analog ansteuerbares oder analogisiert ausgeführtes Ventil. So ist eine präzise Druckeinstellung durch geregeltes Ablassen von Druckmittel in den Druckmittelvorratsbehälter möglich.

Bevorzugt wird die Auslassventilanordnung durch eine Reihenschaltung eines stromlos geschlossenen Auslassventils und eines stromlos offenen, analog ansteuerbaren oder analogisiert ausgeführten zweiten Ventils gebildet.

Alternativ ist es bevorzugt, dass die Auslassventilanordnung durch ein stromlos geschlossenes, analog ansteuerbares oder analogisiert ausgeführtes Auslassventil gebildet wird.

Die Druckregelventilanordnung umfasst bevorzugt weiterhin für jeden Ausgangsdruckanschluss ein elektrisch betätigbares stromlos offenes Trennventil, wobei der Ausgangsdruckanschluss über das Trennventil mit dem zugehörigen Eingangsdruckanschluss verbunden ist. Das Trennventil ist vorteilhafterweise analog ansteuerbar oder analogisiert ausgeführt, um eine präzise Regelung des entsprechenden Radbremsdruckes zu ermöglichen. Insbesondere kann mit dem Trennventil ein Abströmen von Druckmittel über den Eingangsdruckanschluss gedrosselt werden, was im Falle eines vollständigen Absperrens einer hydraulischen Trennung entspricht. Dem Trennventil ist besonders bevorzugt ein Rückschlagventil parallel geschaltet, so dass in umgekehrter Strömungsrichtung eine Aktivierung des Trennventils dagegen nicht wirksam ist. Das Rückschlagventil bewirkt, dass eine Erhöhung des am Eingangsdruckanschluss anliegenden Druckes über den momentan am Ausgangsdruckanschluss vorliegenden Druck unabhängig vom Aktivierungszustand des Trennventils zum Ausgangsdruckanschluss weitergeleitet wird.

Die Bremsensteuervorrichtung ist gemäß einer bevorzugten Ausführungsform der Erfindung als eine bauliche Einheit in Form eines Bremsensteuergeräts mit einer elektronischen Steuer- und Regeleinheit und einer hydraulischen Steuer- und Regeleinheit ausgeführt, wobei die elektronische Steuer- und Regeleinheit zur Ansteuerung der Druckregelventilanordnung und der Druckquelle ausgebildet ist. So kann die (zweite) Bremsensteuervorrichtung einfach optional zu einer (ersten) Bremsensteuervorrichtung des Hauptbremssystems hinzugefügt werden (Baukastenprinzip).

Die Druckquelle ist vorteilhafterweise als Kombination eines, vorteilhafterweise einzigen, Elektromotors mit einer Anzahl von Pumpen ausgeführt, wobei die Anzahl der Pumpen der Anzahl der zur Drucksteuerung vorgesehenen Radbremsen entspricht.

Bevorzugt wird die erfindungsgemäße Bremsensteuervorrichtung als Zusatz zu einem an sich bekannten, fremdansteuerbaren Bremssystem (besonders bevorzugt einem "by-wire"-Bremssystem oder einem konventionellen Bremssystem mit Vakuumbremskraftverstärker) als ein redundantes System hinzugefügt, wobei die erfindungsgemäße (zweite) Bremsensteuervorrichtung in Reihe zwischen die (erste) Bremsensteuervorrichtung des an sich bekannten Bremssystems und eine Gruppe von Radbremsen (d.h. die Radbremsen bzw. einen Teil der Radbremsen) geschaltet wird. Bei Ausfall der ersten Bremsensteuervorrichtung übernimmt bevorzugt die erfindungsgemäße (zweite) Bremsensteuervorrichtung die Bremsfunktionen, insbesondere die Druckaufbaufunktion in den entsprechenden Radbremskreisen und radindividuelle Bremsregeleingriffe. Besonders bevorzugt führt die erfindungsgemäße Bremsensteuervorrichtung neben einfachen Bremsfunktionen auch eine elektronische Bremskraftverteilung (EBV) und/oder eine Antiblockierregelfunktion (ABS) und/oder Fahrdynamikfunktionen (ESP) und/oder sonstige Bremsaktivierungen durch.

Bevorzugt stellt oder regelt die zwischengeschaltete zweite Bremsensteuervorrichtung im Bedarfsfall, insbesondere wenn keine hydraulischen Radbremsdrücke von der vorgeschalteten ersten Bremsensteuervorrichtung eingeleitet werden, selbständig (Rad)Bremsdrücke ein.

Bevorzugt ist die Bremsanlage derart ausgelegt, dass die zweite Bremsensteuervorrichtung bei Ausfällen der ersten Bremsensteuervorrichtung aktiv wird. Ausfall bedeutet, dass die erste Bremsensteuervorrichtung keinen oder einen nicht ausreichenden Druck aufbaut. In diesem Fall übernimmt die zweite Bremsensteuervorrichtung die Ergänzung der Radbremsdrücke auf den benötigten Wert bzw. deren Bereitstellung.

Bevorzugt sind die Bremsensteuervorrichtungen so ausgelegt, dass im Normalbetrieb (kein Ausfall einer der Bremsensteuervorrichtungen) sich eine Bremsensteuervorrichtung (vorteilhafterweise die zweite Bremsensteuervorrichtung) in einem passiven Modus (unbestromte Ventile, keine Ansteuerung der zweiten Druckquelle) befindet und die andere Bremsensteuervorrichtung (vorteilhafterweise die erste Bremsensteuervorrichtung) die übliche Regelfunktionen ausführt.

Die erste Bremsensteuervorrichtung ist bevorzugt als ein Bremsensteuergerät mit einer elektronischen Steuer- und Regeleinheit und einer hydraulischen Steuer- und Regeleinheit ausgeführt.

Zur Erhöhung der Verfügbarkeit der Bremsanlage umfasst die Bremsanlage bevorzugt zumindest zwei, voneinander unabhängige elektrische Energiequellen. Besonders bevorzugt wird die erste Bremsensteuervorrichtung von einer ersten elektrischen Energiequelle und die zweite Bremsensteuervorrichtung von einer zweiten elektrischen Energiequelle mit elektrischer Energie versorgt.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein erstes Ausführungsbeispiel einer erfindungsgemäßen Bremsensteuervorrichtung für eine erfindungsgemäße Bremsanlage,
- Fig. 2: ein zweites Ausführungsbeispiel einer erfindungsgemäßen Bremsensteuervorrichtung für eine erfindungsgemäße Bremsanlage, und
- Fig. 3: ein weiteres Ausführungsbeispiel einer erfindungsgemäßen Bremsanlage.

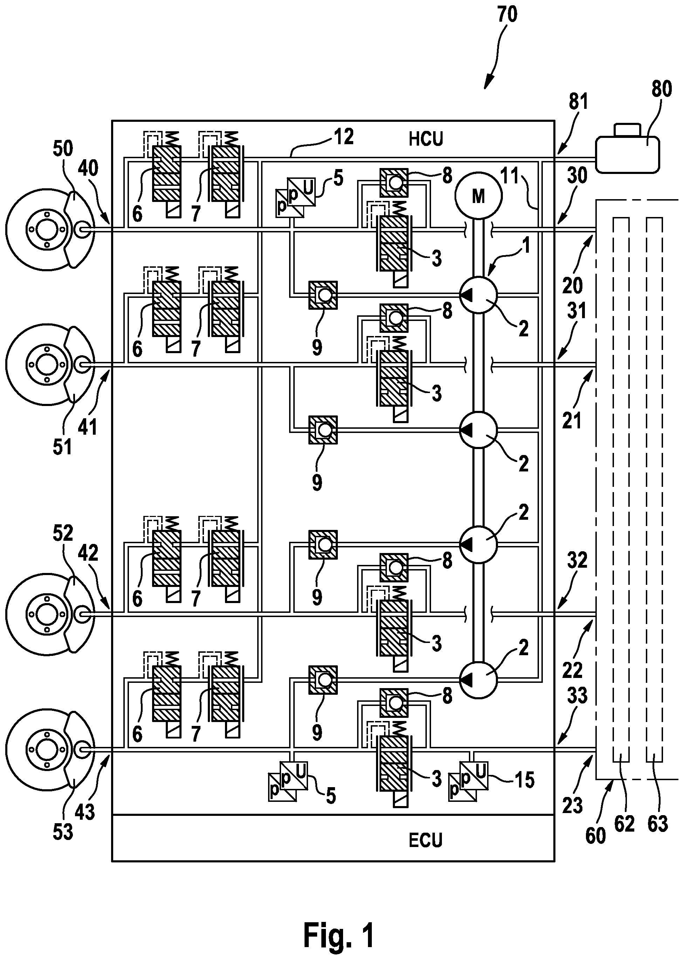

In Fig. 1 ist ein erstes Ausführungsbeispiel einer erfindungsgemäßen Bremsensteuervorrichtung 70 schematisch dargestellt. Beispielsgemäß ist die Bremsensteuervorrichtung 70 für vier Radbremsen 50, 51, 52, 53 dargestellt, eine Erweiterung auf mehr Radbremsen ist einfach möglich. Bremsensteuervorrichtung 70 ist beispielsgemäß als eine unabhängige Baueinheit bzw. ein Modul, z.B. als ein Bremsensteuergerät mit einer elektronischen Steuer- und Regeleinheit (ECU) und einer hydraulischen Steuer- und Regeleinheit (HCU), ausgeführt.
An die radindividuellen Eingangsdruckanschlüsse 30, 31, 32, 33 der Bremsensteuervorrichtung 70 ist je eine hochdruckfeste Bremsleitung angeschlossen, welche je von einem der radindividuellen Ausgangsdruckanschlüsse 20, 21, 22, 23 einer nur schematisch durch gestrichelte Linien angedeuteten Bremsensteuervorrichtung 60 eines Hauptbremssystems kommt. An die radindividuellen Ausgangsdruckanschlüsse 40, 41, 42, 43 der Bremsensteuervorrichtung 70 ist je eine hochdruckfeste Bremsleitung angeschlossen, welche zu einer der Radbremsen 50, 51, 52, 53 führt. D.h. die Bremsensteuervorrichtung 70 wird hydraulisch in Reihe zwischen die Bremsensteuervorrichtung 60 des Hauptbremssystems und die Radbremsen 50, 51, 52, 53 geschaltet.

Weiterhin umfasst die Bremsensteuervorrichtung 70 zumindest einen Behälteranschluss 81 zum Anschluss an einen unter Atmosphärendruck stehen Druckmittelvorratsbehälter 80.
Um die Anzahl der Anschlüsse gering zu halten umfasst die Bremsensteuervorrichtung 70 vorteilhafterweise genau einen Behälteranschluss.

Die Bremsensteuervorrichtung 70 ist also der Bremsensteuervorrichtung 60 des Hauptbremssystems nachgeschaltet und bietet den Vorteil, dass es Druckmittel direkt aus dem Druckmittelvorratsbehälter 80 ansaugen kann. Ein Ansaugen durch die Bremsensteuervorrichtung 60 würde wegen deren Strömungswiderständen zu nicht ausreichenden Druckmittelvolumenströmen führen. Bremsensteuervorrichtung 70 umfasst eine Druckregelventilanordnung zum Einstellen radindividueller Bremsdrücke an den Ausgangsdruckanschlüssen 40, 41, 42, 43 sowie eine elektrisch ansteuerbare Druckquelle 1, und ist somit zum elektrisch gesteuerten Aufbau eines Systembremsdrucks und zur radindividuellen Bremsdruckregelung geeignet.
Je Ausgangsdruckanschluss 40, 41, 42, 43 bzw. Radbremse 50, 51, 52, 53 (Druckregelkreis) umfasst die Druckregelventilanordnung ein elektrisch betätigbares Trennventil 3 und eine elektrisch betätigbare Auslassventilanordnung, z.B. zum Bremsdruckabbau während einer Antiblockierregelung (ABS).

Je Druckregelkreis ist das Trennventil 3 in einer hydraulischen Verbindung zwischen Eingangsdruckanschluss 30, 31, 32, 33 und zugehörigem Ausgangsdruckanschluss 40, 41, 42, 43 angeordnet. Vorteilhafterweise sind die Trennventile 3 stromlos offen ausgeführt, so dass bei einem Ausfall der Bremsensteuervorrichtung 70 die von der Bremsensteuervorrichtung 60 bereitgestellten, radindividuellen Radbremsdrücke durch die Bremsensteuervorrichtung 70 durchgeleitet werden und an den Ausgangsdruckanschlüssen 40, 41, 42, 43 anliegen. Beispielsgemäß sind die Trennventile 3 analogisiert oder anlog ansteuerbar ausgeführt.
Beispielgemäß ist jedem Trennventil 3 ein in Richtung der Radbremse 50, 51, 52, 53 öffnendes Rückschlagventil 8 parallel geschaltet, so dass ein Eingangsdruck an einem Eingangsdruckanschluss 30, 31, 32, 33, welcher größer als der zugeordnete Radbremsdruck ist, unabhängig vom Aktivierungszustand des Trennventils an die Radbremse weitergeleitet wird.

Je Druckregelkreis ist der Ausgangsdruckanschluss 40, 41, 42, 43 und somit die Radbremse 50, 51, 52, 53 über die Auslassventilanordnung mit dem Druckmittelvorratsbehälter 80 verbindbar Die Auslassventilanordnung wird beispielsgemäß durch eine Reihenschaltung eines stromlos geschlossenen Auslassventils 6 und eines stromlos offenen, analog ansteuerbaren oder analogisiert ausgeführten zweiten Ventils 7 gebildet. Beispielsgemäß sind die Ausgangsanschlüsse der Ventile 7 über einen gemeinsamen Leitungsabschnitt 12 mit dem Behälteranschluss 81 verbunden.

Die elektrisch ansteuerbare Druckquelle 1 der Bremsensteuervorrichtung 70 umfasst beispielsgemäß eine Hochdruckpumpe 2 für jede Radbremse 50, 51, 52, 53, welche von einem gemeinsamen Elektromotor M angetrieben werden. Die Saugseite jeder Pumpe 2 ist mit dem unter Atmosphärendruck stehenden Druckmittelvorratsbehälter 80 verbunden. Beispielsgemäß sind die Saugseiten der Pumpen 2 über einen gemeinsamen Ansaugleitungsabschnitt 11 mit dem Behälteranschluss 81 verbunden. Die Druckseite jeder Pumpe 2 ist über ein in Richtung der zugehörigen Radbremse öffnendes Rückschlagventil 9 mit dem zugehörigen Ausgangsdruckanschluss 40, 41, 42, 43 verbunden. Dabei kann das Rückschlagventil durch ein in der Pumpe vorhandenes Druckventil gebildet sein, was regelmäßig dann der Fall ist, wenn als Pumpe 2 eine Kolbenpumpe zum Einsatz kommt.

Jeder zu versorgenden Radbremse 50, 51, 52, 53 (insbesondere entweder die zwei Radbremsen der Vorderachse oder die beispielsgemäßen vier Radbremsen von Vorder- und Hinterachse) ist somit ein "Hydraulikmodul" zugeordnet, das aus einer Pumpe 2 und Hydraulikventilen 3, 6, 7 der Druckregelventilanordnung besteht und für jede zu versorgende Radbremse gleich aufgebaut ist. Bremsensteuervorrichtung 70 umfasst beispielsgemäß vier identische Druckregelkreise (für jede Radbremse einen Druckregelkreis) mit im Wesentlichen jeweils der elektrisch ansteuerbaren Druckquelle in Form der Pumpe 2, dem elektrisch betätigbaren Trennventil 3 und der Auslassventilanordnung 6, 7, wobei die Ansaugseiten der Pumpen 2 und die Ventile 7 mit dem Behälteranschluss 81 verbunden sind.

Beispielsgemäß ist in der Bremsensteuervorrichtung 70 für die Radbremsen 50 und 53 je ein Drucksensor 5 zur Bestimmung des Druckes an den Ausgangsdruckanschlüssen 40 und 43 vorgesehen. Zusätzlich umfasst die Bremsensteuervorrichtung 70 beispielsgemäß einen Drucksensor 15 zur Bestimmung des Druckes an dem Eingangsdruckanschluss 33. Anhand des Signals dieses Sensors kann bei elektrisch inaktiver erster Bremsensteuervorrichtung 60 ein pedalgesteuerter Bremsdruckaufbau detektiert werden.

Üblicherweise umfassen Druckmittelvorratsbehälter konventioneller hydraulischer Bremsanlagen zwei Kammern, welche den beiden Druckräumen des bremspedalbetätigbaren Hauptbremszylinders zugeordnet sind. Vorteilhafterweise umfasst der Druckmittelvorratsbehälter 80 drei Kammern, wobei die zusätzliche dritte Kammer zum Anschluss an die Bremsensteuervorrichtung 70 vorgesehen ist. Aus der dritten Kammer wird das im Betrieb von der Bremsensteuervorrichtung 70 angesaugte Druckmittelvolumen bereitgestellt und in die dritte Kammer wird das überschüssige Druckmittelvolumen, z.B. bei einer Antiblockierregelung mittels der Bremsensteuervorrichtung 70, abgelassen.

Bremsensteuervorrichtung 70 ist beispielsgemäß als Ergänzung zu einer Bremsensteuervorrichtung 60 eines Hauptbremssystems vorgesehen, welche selbst eine elektrisch ansteuerbare Druckquelle 63 und eine Druckregelventilanordnung 62 zum Einstellen radindividueller Bremsdrücke umfasst, d.h. welche zum elektrisch gesteuerten Aufbau eines Systembremsdrucks und zur radindividuellen Bremsdruckregelung ausgebildet ist.

Beispielsweise ist die Bremsensteuervorrichtung 60 als eine unabhängige Baueinheit bzw. ein Modul, z.B. als ein Bremsensteuergerät (HECU) mit einer elektronischen Steuer- und Regeleinheit (ECU) und einer hydraulischen Steuer- und Regeleinheit (HCU), ausgeführt. Die elektronische Steuer- und Regeleinheit ist dabei zur Ansteuerung der Druckregelventilanordnung 62 und der Druckquelle 63 ausgebildet.

Beispielsgemäß übernimmt die Bremsensteuervorrichtung 60 (reguläres Hauptbremsmodul) den Systemdruckaufbau im normalen Bremsbetrieb und die Bremsensteuervorrichtung 70 (Backup-Modul) steht für den Fall bereit, dass die Systemdruckbereitstellungsfunktion der Bremsensteuervorrichtung 60 ausfällt. In dieser Situation übernimmt die Bremsensteuervorrichtung 70 mittels der Druckquelle 1 den Druckaufbau. Bremsensteuervorrichtung 70 kann einen fahrerunabhängigen Druck aufbauen und radindividuell mittels der Druckregelventilanordnung modulieren. In einer Rückfallbetriebsart, z.B. wenn keine elektrische Energie für die Bremsanlage, also die Bremsensteuervorrichtungen 60 und 70, zur Verfügung steht, lässt die Bremsensteuervorrichtung 70 jederzeit einen vom Fahrer eingesteuerten hydraulischen Druckaufbau zu.

Beispielsgemäß umfassen die Bremsensteuervorrichtungen 60 und 70 jeweils eine eigene elektronische Steuer- und Regeleinheit (ECU) zur Ansteuerung der jeweiligen Druckquelle und Druckregelventilanordnung. Bremsensteuervorrichtung 70 umfasst somit die für eine Redundanz der Bremsanlage nötige zweite elektronische Steuer- und Regeleinheit sowie die zweite Druckquelle, so dass in dem Gesamtsystem zwei unabhängige elektronische Steuer- und Regeleinheiten und zwei unabhängige elektrisch ansteuerbare Druckquellen vorhanden sind.

Ein weiterer Vorteil der erfindungsgemäßen Bremsanlage ist es, dass die Bremsdrücke mit hoher Verfügbarkeit radindividuell modulierbar sind, entweder mittels der Druckregelventilanordnung der Bremsensteuervorrichtung 60 (Hauptbremsmodul) oder mittels der Druckregelventilanordnung der Bremsensteuervorrichtung 70 (Backup-Modul). Damit kann die Blockierverhinderungsfunktion der Bremsanlage auch bei elektrisch inaktiver Bremsensteuervorrichtung 60 aufrechterhalten werden.

Es ist ebenfalls vorteilhaft, dass an der Bremsensteuervorrichtung 60 keine weiteren Druckleitungsanschlüsse zusätzlich zu dem bereits üblichen einen Druckausgangsanschluss je Radbremse benötigt werden. Die erfindungsgemäße Bremsensteuervorrichtung 70 kann einfach an die üblicherweise vier radindividuellen Druckausgänge der Bremsensteuervorrichtung 60 angeschlossen werden.

Zur weiteren Erhöhung der Verfügbarkeit, insbesondere der Bremsregelfunktion, sind in der Bremsanlage vorteilhafterweise zumindest zwei unabhängige elektrische Energieversorgungen vorgesehen. Z.B. wird die Bremsensteuervorrichtung 60 von einer ersten elektrischen Energieversorgung und die Bremsensteuervorrichtung 70 von einer zweiten elektrischen Energieversorgung versorgt.

Die Bremsanlage bzw. das Hauptbremssystem umfasst bevorzugt weitere, an sich bekannte Komponenten, wie z.B. ein Bremspedal oder einen bremspedalbetätigbaren Hauptbremszylinder. Beispielsgemäß ist die Bremsensteuervorrichtung 60 mit den Druckräumen eines Hauptbremszylinders verbunden.

Beispielsweise umfasst Bremsensteuervorrichtung 60 einen bremspedalbetätigbaren Hauptbremszylinder, einen hydraulischen Bremspedalgefühlsimulator, eine Druckquelle in Form einer hydraulischen Zylinder-Kolben-Anordnung bzw. eines elektrohydraulischen Linearaktuators, deren/dessen Kolben von einem Elektromotor, z.B. unter Zwischenschaltung eines Rotations-Translationsgetriebes, betätigbar ist, und eine Druckregelventilanordnung.

Alternativ umfasst das Hauptbremssystem z.B. einen bremspedalbetätigbaren Hauptbremszylinder, der auch mittels eines elektromechanischen Aktuators (mit Elektromotor) betätigbar ist.

Alternativ umfasst das Hauptbremssystem z.B. einen Hauptbremszylinder mit vorgeschaltetem, elektrisch ansteuerbaren Vakuumbremskraftverstärker.

Alternativ oder zusätzlich umfasst das Hauptbremssystem bzw. die Bremsensteuervorrichtung 60 eine an sich bekannte ESP-Bremsregeleinheit, die eine Druckregelventilanordnung mit zwölf Ventilen zur Regelung der Radbremsdrücke, einen Niederdruckspeicher je Bremskreis und eine zweikreisige Rückförderpumpe umfasst.

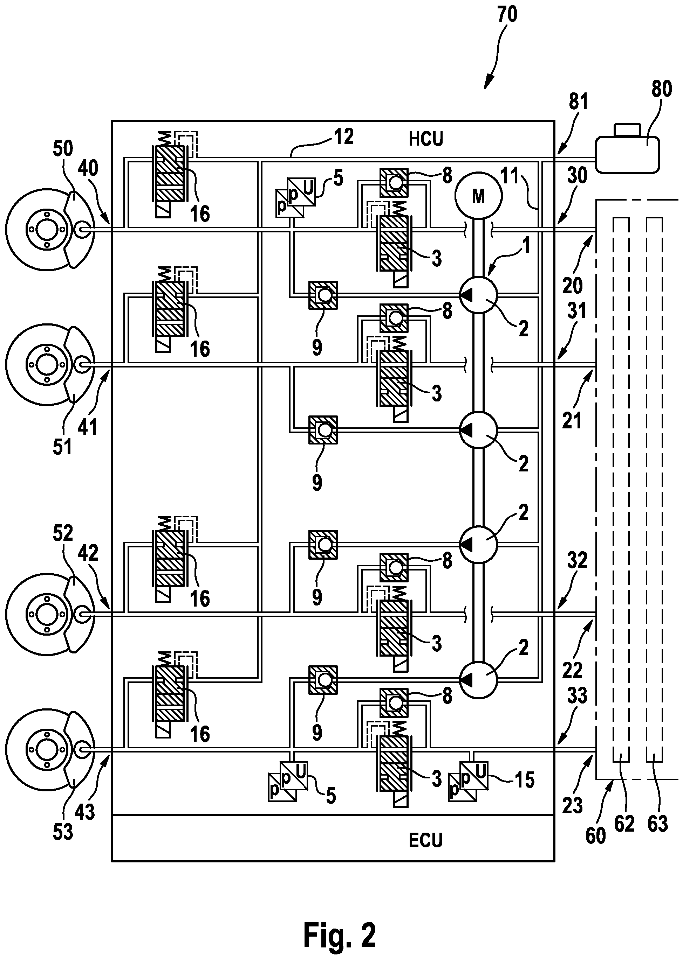

In Fig. 2 ist ein zweites Ausführungsbeispiel einer erfindungsgemäßen Bremsensteuervorrichtung 70 schematisch dargestellt. Im Unterschied zum ersten Ausführungsbeispiel der Fig. 1 wird die Auslassventilanordnung der Druckregelventilanordnung durch ein stromlos geschlossenes, analog ansteuerbares oder analogisiert ausgeführtes Auslassventil 16 je Druckregelkreis gebildet. D.h. das Auslassventil 6 und das Ventil 7 des ersten Ausführungsbeispiels sind durch das Auslassventil 16 ersetzt.

Durch die erfindungsgemäße Bremsanlage werden die funktionalen Anforderungen an eine Bremsanlage aus dem hochautomatischen Fahren erfüllt.

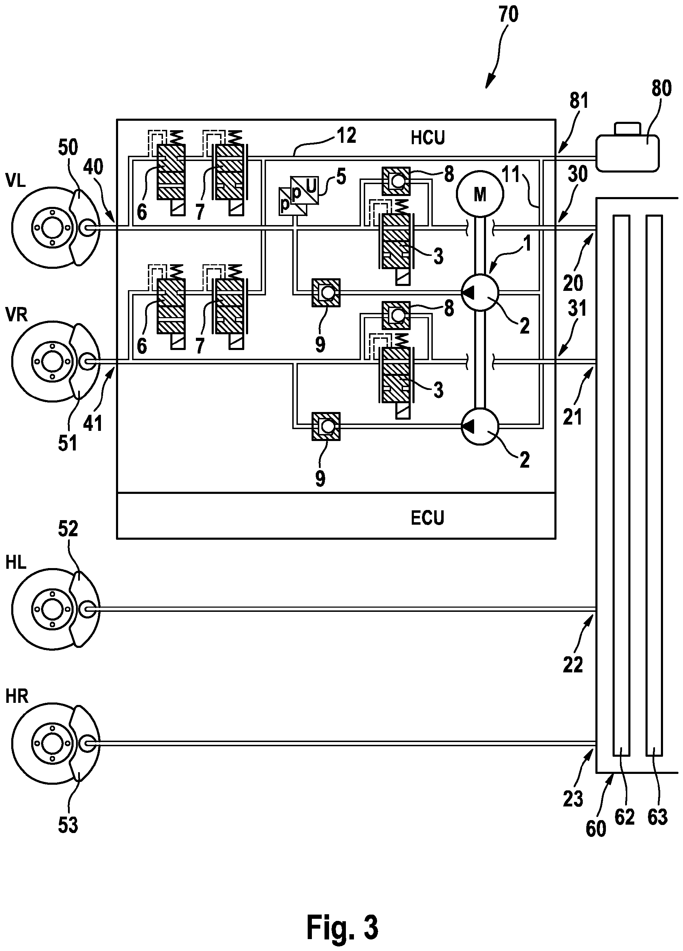

In Fig. 3 ist schematisch ein weiteres Ausführungsbeispiel einer erfindungsgemäßen Bremsanlage dargestellt. Die Bremsanlage umfasst vier hydraulisch betätigbare Radbremsen 50, 51, 52, 53 und eine erste Bremsensteuervorrichtung 60 (sogenanntes Hauptbremssystems), welche einen radindividuellen Ausgangsdruckanschluss 20, 21, 22, 23 für jede dieser Radbremsen 50, 51, 52, 53 umfasst. Bremsensteuervorrichtung 60 umfasst weiter eine elektrisch ansteuerbare Druckquelle 63 und eine Druckregelventilanordnung 62 zum Einstellen radindividueller Bremsdrücke an den Ausgangsdruckanschluss 20, 21, 22, 23.

Vorteilhafterweise ist die Bremsensteuervorrichtung 60 als eine unabhängige Baueinheit bzw. ein Modul, z.B. als ein Bremsensteuergerät (HECU) mit einer elektronischen Steuer- und Regeleinheit (ECU) und einer hydraulischen Steuer- und Regeleinheit (HCU), ausgeführt. Die elektronische Steuer- und Regeleinheit ist dabei zur Ansteuerung der Druckregelventilanordnung 62 und der Druckquelle 63 ausgebildet.

Die Bremsanlage umfasst weiterhin eine zweite Bremsensteuervorrichtung 70, die zur Betätigung und Regelung nur eines Teils der hydraulisch betätigbaren Radbremsen vorgesehen ist. Beispielsgemäß ist Bremsensteuervorrichtung 70 für die zwei Radbremsen 50 und 51, welche z.B. der Vorderachse des Kraftfahrzeugs zugeordnet sind (VR: rechtes Vorderrad, VL: linkes Vorderrad), vorgesehen. Entsprechend umfasst die Bremsensteuervorrichtung 70 einen radindividuellen Eingangsdruckanschluss 30, 31 sowie einen radindividuellen Ausgangsdruckanschluss 40, 41 für jede der zwei Radbremsen 50 und 51, wobei der Eingangsdruckanschluss 30 bzw. 31 über eine hochdruckfeste Bremsleitung mit dem entsprechenden Ausgangsdruckanschluss 20 bzw. 21 der ersten Bremsensteuervorrichtung 60 verbunden ist und der Ausgangsdruckanschluss 40 bzw. 41 über je eine hochdruckfeste Bremsleitung mit der Radbremse 50 bzw. 51 verbunden ist.

Der Ausgangsdruckanschluss 22 bzw. 23 der ersten Bremsensteuervorrichtung 60 ist über eine hochdruckfeste Bremsleitung unmittelbar mit der Radbremse 52 bzw. 53 verbunden, welche dem linken Hinterrad HL bzw. dem rechten Hinterrad HR zugeordnet sind. Die Bremsleitungen können, wie in Fig. 3 dargestellt, außerhalb der Bremsensteuervorrichtung 70 verlaufen. Alternativ können die Bremsleitungen auch durch die Bremsensteuervorrichtung 70 verlaufen.

Die zweite Bremsensteuervorrichtung 70 ist somit hydraulisch in Reihe zwischen die erste Bremsensteuervorrichtung 60 bzw. die den Radbremsen 50, 51 zugeordneten Ausgangsdruckanschlüsse 20, 21 der ersten Bremsensteuervorrichtung 60 und die Radbremsen 50, 51 geschaltet.

Weiterhin umfasst die zweite Bremsensteuervorrichtung 70 zumindest einen Behälteranschluss 81 zum Anschluss an einen unter Atmosphärendruck stehen Druckmittelvorratsbehälter 80.

Ansonsten entspricht der grundsätzliche Aufbau der Bremsensteuervorrichtung 70, insbesondere bezüglich der Pumpen 2 und der Druckregelventilanordnung (Ventile 3, 6, 7, 8, 9), dem Aufbau des anhand von Fig. 1 ausführlich erläuterten Ausführungsbeispiels der (zweiten) Bremsensteuervorrichtung 70. Alternativ kann die Bremsensteuervorrichtung 70 auch entsprechend dem in Fig. 2 dargestellten Ausführungsbeispiel aufgeführt sein (insbesondere Ventile 3, 16, 8, 9).

Bevorzugt wird eine, wie z.B. in Fig. 3 dargestellte, zweite Bremsensteuervorrichtung 70 mit zwei hydraulischen Kanälen für die Radbremsen 50, 51 der Vorderachse mit so genannten EPB-Kombibremsen (EPB: Elektrische Parkbremse) an der Hinterachse des Fahrzeugs kombiniert. Die EPB-Kombibremse kann außer ihrer hydraulischen Funktion eines druckgesteuerten Spannkraftaufbaus zusätzlich elektromechanisch betätigt werden. D.h. bevorzugt sind die Radbremsen 52 und 53 sowohl hydraulisch als auch elektromechanisch betätigbar ausgeführt.

Die zweite Bremsensteuervorrichtung 70 ist beispielsgemäß als ein Bremsensteuergerät mit einer elektronischen Steuer- und Regeleinheit (ECU) und einer hydraulischen Steuer- und Regeleinheit (HCU) ausgeführt. Die elektronische Steuer- und Regeleinheit ist dabei zur Ansteuerung der zweiten Druckregelventilanordnung (3, 6, 7) und der zweiten Druckquelle 1 ausgebildet. Weiterhin werden die EPB-Kombibremsen vorteilhafterweise elektrisch an die elektronische Steuer- und Regeleinheit der zweiten Bremsensteuervorrichtung 70 angeschlossen, damit bei einem möglichen Ausfall der elektronische Steuer- und Regeleinheit der ersten Bremsensteuervorrichtung 60 die elektronische Steuer- und Regeleinheit der zweiten Bremsensteuervorrichtung 70 in der Lage ist, an allen vier Radbremsen 50, 51, 52, 53 Bremsmomente aufzubauen.

## Patentansprüche

1. Bremsanlage für Kraftfahrzeuge mit zumindest vier hydraulisch betätigbaren Radbremsen (50, 51, 52, 53), einem unter Atmosphärendruck stehenden Druckmittelvorratsbehälter (80) und einer ersten elektrohydraulischen Bremsensteuervorrichtung (60), welche eine erste Druckregelventilanordnung (62) zum Einstellen radindividueller Bremsdrücke, eine erste elektrisch ansteuerbare Druckquelle (63) und für jede Radbremse einen radindividuellen Ausgangsdruckanschluss (20, 21, 22, 23) umfasst, **dadurch gekennzeichnet, dass** eine zweite elektrohydraulische Bremsensteuervorrichtung (70), welche eine zweite Druckregelventilanordnung (3, 6, 7, 16), eine zweite elektrisch ansteuerbare Druckquelle (1) und einen Behälteranschluss (81) umfasst, vorgesehen ist, welche für eine Gruppe von Radbremsen (50, 51; 50, 51, 52, 53) in Reihe zwischen die zugehörigen Ausgangsdruckanschlüsse (20, 21; 20, 21, 22, 23) der ersten Bremsensteuervorrichtung (60) und die Radbremsen der Gruppe von Radbremsen (50, 51; 50, 51, 52, 53) geschaltet ist und über den Behälteranschluss (81) mit dem Druckmittelvorratsbehälter (80) verbunden ist.

2. Bremsanlage nach Anspruch 1, **dadurch gekennzeichnet, dass** die Radbremsen, welche nicht der Gruppe von Radbremsen angehören, sowohl hydraulisch betätigbar als auch elektromechanisch betätigbar ausgeführt sind.

3. Bremsanlage nach Anspruch 1 oder 2, **dadurch gekennzeichnet, dass** die Gruppe von Radbremsen durch die, insbesondere zwei, hydraulisch betätigbaren Radbremsen (50, 51) einer Vorderachse des Kraftfahrzeugs oder durch alle hydraulisch betätigbaren Radbremsen (50, 51, 52, 53) gebildet wird.

4. Bremsanlage nach einem der Ansprüche 1 bis 3, **dadurch gekennzeichnet, dass** die zweite Druckquelle (1) für jede Radbremse der Gruppe von Radbremsen eine Pumpe (2) umfasst, deren Saugseiten mit dem Druckmittelvorratsbehälter (80) verbunden sind.

5. Bremsanlage nach einem der Ansprüche 1 bis 4, **dadurch gekennzeichnet, dass** die zweite Druckregelventilanordnung für jede Radbremse der Gruppe von Radbremsen eine elektrisch betätigbare Auslassventilanordnung mit zumindest einem analog ansteuerbaren oder analogisiert ausgeführten Ventil (7, 16) umfasst, wobei die Radbremse über die Auslassventilanordnung (6, 7; 16) mit dem Druckmittelvorratsbehälter (80) verbindbar ist.

6. Bremsanlage nach einem der Ansprüche 1 bis 5, **dadurch gekennzeichnet, dass** die zweite Bremsensteuervorrichtung (70) für jede der Radbremsen (50, 51; 50, 51, 52, 53) der Gruppe von Radbremsen einen radindividuellen Eingangsdruckanschluss (30, 31; 30, 31, 32, 33), der mit dem der Radbremse zugeordneten Ausgangsdruckanschluss (20, 21; 20, 21, 22, 23) der ersten Bremsensteuervorrichtung (60) verbunden ist, und einen radindividuellen Ausgangsdruckanschluss (40, 41; 40, 41, 42, 43) umfasst, welcher mit der Radbremse (50, 51; 50, 51, 52, 53) verbunden ist.

7. Bremsanlage nach einem der Ansprüche 1 bis 6, **dadurch gekennzeichnet, dass** die erste Bremsensteuervorrichtung (60) als eine bauliche Einheit in Form eines Bremsensteuergeräts mit einer ersten elektronischen Steuer- und Regeleinheit und einer ersten hydraulischen Steuer- und Regeleinheit ausgeführt ist, wobei die erste elektronische Steuer- und Regeleinheit zur Ansteuerung der ersten Druckregelventilanordnung und der ersten Druckquelle ausgebildet ist.

8. Bremsanlage nach einem der Ansprüche 1 bis 7, **dadurch gekennzeichnet, dass** die zweite Bremsensteuervorrichtung (70) eine Bremsensteuervorrichtung gemäß einem der Ansprüche 9 bis 16 ist.

9. Bremsensteuervorrichtung (70) für zumindest vier hydraulisch betätigbare Radbremsen (50, 51, 52, 53) einer Kraftfahrzeugbremsanlage, welche eine elektrisch ansteuerbare Druckquelle (1), einen radindividuellen Ausgangsdruckanschluss (40, 41, 42, 43) für jede der Radbremsen und eine Druckregelventilanordnung (3, 6, 7, 16) zum Einstellen radindividueller Bremsdrücke an den Ausgangsdruckanschlüssen umfasst, **dadurch gekennzeichnet, dass** die Bremsensteuervorrichtung (70) einen Behälteranschluss (81) zur Verbindung mit einem unter Atmosphärendruck stehenden Druckmittelvorratsbehälter (80) und einen radindividuellen Eingangsdruckanschluss (30, 31, 32, 33) für jede der Radbremsen umfasst.

10. Bremsensteuervorrichtung nach Anspruch 9, **dadurch gekennzeichnet, dass** der Behälteranschluss (81) mit der Druckquelle zur Versorgung der Druckquelle mit Druckmittel verbunden ist.

11. Bremsensteuervorrichtung nach Anspruch 9 oder 10, **dadurch gekennzeichnet, dass** die Druckquelle (1) für jede der Radbremsen (50, 51, 52, 53) eine Pumpe (2) umfasst, wobei die Saugseiten der Pumpen mit dem Behälteranschluss (81) verbunden sind.

12. Bremsensteuervorrichtung nach einem der Ansprüche 9 bis 11, **dadurch gekennzeichnet, dass** die Druckregelventilanordnung eine elektrisch betätigbare Auslassventilanordnung (6, 7; 16) für jeden Ausgangsdruckanschluss (40, 41, 42, 43) umfasst, wobei der Ausgangsdruckanschluss (40, 41, 42, 43) über die Auslassventilanordnung (6, 7; 16) mit dem Behälteranschluss (81) verbunden ist.

13. Bremsensteuervorrichtung nach Anspruch 12, **dadurch gekennzeichnet, dass** die Auslassventilanordnung zumindest ein analog ansteuerbares oder analogisiert ausgeführtes Ventil (7, 16) umfasst.

14. Bremsensteuervorrichtung nach Anspruch 13, **dadurch gekennzeichnet, dass** die Auslassventilanordnung durch eine Reihenschaltung eines stromlos geschlossenen Auslassventils (6) und eines stromlos offenen, analog ansteuerbaren oder analogisiert ausgeführten zweiten Ventils (7) gebildet wird.

15. Bremsensteuervorrichtung nach Anspruch 13, **dadurch gekennzeichnet, dass** die Auslassventilanordnung durch ein stromlos geschlossenes, analog ansteuerbares oder analogisiert ausgeführtes Auslassventil (16) gebildet wird.

16. Bremsensteuervorrichtung nach einem der Ansprüche 9 bis 15, **dadurch gekennzeichnet, dass** die Bremsensteuervorrichtung (70) als eine bauliche Einheit in Form eines Bremsensteuergeräts mit einer elektronischen Steuer- und Regeleinheit und einer hydraulischen Steuer- und Regeleinheit ausgeführt ist, wobei die elektronische Steuer- und Regeleinheit zur Ansteuerung der Druckregelventilanordnung (3, 6, 7, 16) und der Druckquelle (1) ausgebildet ist.

## Claims

1. Brake system for motor vehicles, having at least four hydraulically actuable wheel brakes (50, 51, 52, 53), a pressure-medium reservoir (80) under atmospheric pressure, and a first electrohydraulic brake control device (60), which comprises a first pressure control valve assembly (62) for setting wheel-specific brake pressures, a first electrically controllable pressure source (63), and, for each wheel brake, a wheel-specific outlet pressure connection (20, 21, 22, 23), **characterized in that** a second electrohydraulic brake control device (70) is provided, which comprises a second pressure control valve assembly (3, 6, 7, 16), a second electrically controllable pressure source (1), and a reservoir connection (81), and which, for one group of wheel brakes (50, 51; 50, 51, 52, 53), is connected in series between the associated outlet pressure connections (20, 21; 20, 21, 22, 23) of the first brake control device (60) and the wheel brakes of the group of wheel brakes (50, 51; 50, 51, 52, 53), and is connected to the pressure-medium reservoir (80) via the reservoir connection (81).

2. Brake system according to Claim 1, **characterized in that** the wheel brakes which do not belong to the group of wheel brakes are embodied so as to be both hydraulically actuable and also electromechanically actuable.

3. Brake system according to Claim 1 or 2, **characterized in that** the group of wheel brakes is formed by the, in particular two, hydraulically actuable wheel brakes (50, 51) on a front axle of the motor vehicle or by all the hydraulically actuable wheel brakes (50, 51, 52, 53).

4. Brake system according to one of Claims 1 to 3, **characterized in that** the second pressure source (1) comprises, for each wheel brake of the group of wheel brakes, a pump (2), the suction sides of which pumps are connected to the pressure-medium reservoir (80).

5. Brake system according to one of Claims 1 to 4, **characterized in that** the second pressure control valve assembly comprises, for each wheel brake of the group of wheel brakes, an electrically actuable outlet valve assembly having at least one valve (7, 16) that can be controlled in analog fashion or is embodied in analogized fashion, wherein the wheel brake can be connected to the pressure-medium reservoir (80) by the outlet valve assembly (6, 7; 16).

6. Brake system according to one of Claims 1 to 5, **characterized in that** the second brake control device (70) comprises, for each of the wheel brakes (50, 51; 50, 51, 52, 53) of the group of wheel brakes, a wheel-specific inlet pressure connection (30, 31; 30, 31, 32, 33), which is connected to the outlet pressure connection (20, 21; 20, 21, 22, 23), associated with the wheel brake, of the first brake control device (60), and comprises a wheel-specific outlet pressure connection (40, 41; 40, 41, 42, 43), which is connected to the wheel brake (50, 51; 50, 51, 52, 53).

7. Brake system according to one of Claims 1 to 6, **characterized in that** the first brake control device (60) is embodied as a structural unit in the form of a brake control unit having a first electronic open-loop and closed-loop control unit and a first hydraulic open-loop and closed-loop control unit, wherein the first electronic open-loop and closed-loop control unit is designed to control the first pressure control valve assembly and the first pressure source.

8. Brake system according to one of Claims 1 to 7, **characterized in that** the second brake control device (70) is a brake control device according to one of Claims 9 to 16.

9. Brake control device (70) for at least four hydraulically actuable wheel brakes (50, 51, 52, 53) of a motor vehicle brake system, which comprises an electrically controllable pressure source (1), a wheel-specific outlet pressure connection (40, 41, 42, 43) for each of the wheel brakes and a pressure control valve assembly (3, 6, 7, 16) for setting wheel-specific brake pressures at the outlet pressure connections, **characterized in that** the brake control device (70) comprises a reservoir connection (81) for connection to a pressure-medium reservoir (80) under atmospheric pressure and a wheel-specific inlet pressure connection (30, 31, 32, 33) for each of the wheel brakes.

10. Brake control device according to Claim 9, **characterized in that** the reservoir connection (81) is connected to the pressure source for supplying the pressure source with pressure medium.

11. Brake control device according to Claim 9 or 10, **characterized in that** the pressure source (1) comprises a pump (2) for each of the wheel brakes (50, 51, 52, 53), wherein the suction sides of the pumps are connected to the reservoir connection (81).

12. Brake control device according to one of Claims 9 to 11, **characterized in that** the pressure control valve assembly comprises an electrically actuable outlet valve assembly (6, 7; 16) for each outlet pressure connection (40, 41, 42, 43), wherein the outlet pressure connection (40, 41, 42, 43) is connected to the reservoir connection (81) via the outlet valve assembly (6, 7; 16).

13. Brake control device according to Claim 12, **characterized in that** the outlet valve assembly comprises at least one valve (7, 16) that can be controlled in analog fashion or is embodied in analogized fashion.

14. Brake control device according to Claim 13, **characterized in that** the outlet valve assembly is formed by series connection of an outlet valve (6) that is closed when deenergized and a second valve (7) that is open when deenergized and can be controlled in analog fashion or is embodied in analogized fashion.

15. Brake control device according to Claim 13, **characterized in that** the outlet valve assembly is formed by an outlet valve (16) that is closed when deenergized and can be controlled in analog fashion or is embodied in analogized fashion.

16. Brake control device according to one of Claims 9 to 15, **characterized in that** the brake control device (70) is embodied as a structural unit in the form of a brake control unit having an electronic open-loop and closed-loop control unit and a hydraulic open-loop and closed-loop control unit, wherein the electronic open-loop and closed loop control unit is designed to control the pressure control valve assembly (3, 6, 7, 16) and the pressure source (1).

## Revendications

1. Système de freinage destiné à des véhicules automobiles et comprenant au moins quatre freins de roue à commande hydraulique (50, 51, 52, 53), un réservoir de stockage de fluide sous pression (80) à la pression atmosphérique et un premier dispositif de commande de frein électrohydraulique (60) qui comprend un premier ensemble de soupape de régulation de pression (62) destiné à régler les pressions de freinage propres à chaque roue, une première source de pression à commande électrique (63) et, pour chaque frein de roue, un raccord de pression de sortie (20, 21, 22, 23) propre à chaque roue,
**caractérisé en ce qu'**un deuxième dispositif de commande de frein électrohydraulique (70), qui comprend un deuxième ensemble de soupapes de régulation de pression (3, 6, 7, 16), une deuxième source de pression à commande électrique (1) et un raccord de réservoir (81), est prévu qui est monté pour un groupe de freins de roue (50, 51 ; 50, 51, 52, 53) en série entre les raccords de pression de sortie associés (20, 21 ; 20, 21, 22, 23) du premier dispositif de commande de frein (60) et les freins de roue du groupe de freins de roue (50, 51 ; 50, 51, 52, 53) et est relié au réservoir de stockage de fluide sous pression (80) par le biais du raccord de réservoir (81).

2. Système de freinage selon la revendication 1, **caractérisé en ce que** les freins de roue, qui n'appartiennent pas au groupe de freins de roue, sont conçus pour être actionnables aussi bien par des moyens hydrauliques que par des moyens électromécaniques.

3. Système de freinage selon la revendication 1 ou 2, **caractérisé en ce que** le groupe de freins de roue est formé par les freins de roue, notamment deux freins de roue, à commande hydraulique (50, 51) d'un essieu avant du véhicule automobile ou par tous les freins de roue à commande hydraulique (50, 51, 52, 53).

4. Système de freinage selon l'une des revendications 1 à 3, **caractérisé en ce que** la deuxième source de pression (1) comprend pour chaque frein de roue du groupe de freins de roue une pompe (2) dont les côtés aspiration sont reliés au réservoir de fluide sous pression (80).

5. Système de freinage selon l'une des revendications 1 à 4, **caractérisé en ce que** le deuxième ensemble de soupapes de régulation de pression comprend pour chaque frein de roue du groupe de freins de roue un ensemble de soupapes de sortie actionnable électriquement pourvu d'au moins une soupape (7, 16) analogique ou à commande analogique, le frein de roue pouvant être relié au réservoir de stockage de fluide sous pression (80) par le biais de l'ensemble de soupapes de sortie (6, 7 ; 16).

6. Système de freinage selon l'une des revendications 1 à 5, **caractérisé en ce que** le deuxième dispositif de commande de frein (70) comprend pour chacun des freins de roue (50, 51 ; 50, 51, 52, 53) du groupe de freins de roue un raccord de pression d'entrée (30, 31 ; 30, 31, 32, 33) propre à chaque roue, lequel raccord est relié au raccord de pression de sortie (20, 21 ; 20, 21, 22, 23), associé au frein de roue, du premier dispositif de commande de frein (60), et un raccord de pression de sortie (40, 41 ; 40, 41, 42, 43) propre à chaque roue, lequel raccord est relié au frein de roue (50, 51 ; 50, 51, 52, 53).

7. Système de freinage selon l'une des revendications 1 à 6, **caractérisé en ce que** le premier dispositif de commande de frein (60) est conçu comme une unité structurelle se présentant sous la forme d'un appareil de commande de frein pourvu d'une première unité de commande et de régulation électronique et d'une première unité de commande et de régulation hydraulique, la première unité de commande et de régulation électronique étant conçue pour commander le premier ensemble de soupapes de régulation de pression et la première source de pression.

8. Système de freinage selon l'une des revendications 1 à 7, **caractérisé en ce que** le deuxième dispositif de commande de frein (70) est un dispositif de commande de frein selon l'une des revendications 9 à 16.

9. Dispositif de commande de frein (70) destiné à au moins quatre freins de roue à commande hydraulique (50, 51, 52, 53) d'un système de freinage de véhicule automobile et comprenant une source de pression à commande électrique (1), un raccord de pression de sortie (40, 41, 42, 43) propre à chaque roue et destiné à chacun des freins de roue et un ensemble de soupapes de régulation de pression (3, 6, 7, 16) destiné à régler les pressions de freinage propres à chaque roue au niveau des raccords de pression de sortie, **caractérisé en ce que** le dispositif de commande de frein (70) comporte un raccord de réservoir (81) destiné au raccordement à un réservoir de stockage de fluide sous pression (80) à la pression atmosphérique et un raccord de pression d'entrée (30, 31, 32, 33) propre à chaque roue et destiné à chacun des freins de roue.

10. Dispositif de commande de frein selon la revendication 9, **caractérisé en ce que** le raccord de réservoir (81) est relié à la source de pression pour alimenter la source de pression en fluide sous pression.

11. Dispositif de commande de frein selon la revendication 9 ou 10, **caractérisé en ce que** la source de pression (1) comprend pour chacun des freins de roue (50, 51, 52, 53) une pompe (2), les côtés aspiration des pompes étant reliés au raccord de récipient (81).

12. Dispositif de commande de frein selon l'une des revendications 9 à 11, **caractérisé en ce que** l'ensemble de soupapes de régulation de pression comprend un ensemble de soupapes de sortie à commande électrique (6, 7 ; 16) pour chaque raccord de pression de sortie (40, 41, 42, 43), le raccord de pression de sortie (40, 41, 42, 43) étant relié au raccord de récipient (81) par le biais de l'ensemble de soupapes de sortie (6, 7 ; 16).

13. Dispositif de commande de frein selon la revendication 12, **caractérisé en ce que** l'ensemble de soupapes de sortie comprend au moins une soupape (7, 16) analogique ou à commande analogique.

14. Dispositif de commande de frein selon la revendication 13, **caractérisé en ce que** l'ensemble de soupapes de sortie est formé par un montage en série d'une soupape de sortie (6) fermée hors tension et d'une deuxième soupape (7), analogique ou à commande analogique, ouverte hors tension.

15. Dispositif de commande de frein selon la revendication 13, **caractérisé en ce que** l'ensemble de soupapes de sortie est formé par une soupape de sortie (16), analogique ou à commande analogique, fermée hors tension.

16. Dispositif de commande de frein selon l'une des revendications 9 à 15, **caractérisé en ce que** le dispositif de commande de frein (70) est conçu comme une unité structurelle se présentant sous la forme d'un appareil de commande de frein pourvu d'une première unité de commande et de régulation électronique et d'une première unité de commande et de régulation hydraulique, la première unité de commande et de régulation électronique étant conçue pour commander le premier ensemble de soupapes de régulation de pression (3, 6, 7, 16) et la première source de pression (1).
